# EUROPÄISCHE PATENTSCHRIFT

(11) **EP 3 769 606 B1**
(45) Veröffentlichungstag und Bekanntmachung des Hinweises auf die Patenterteilung: **26.07.2023**
(21) Anmeldenummer: 20169607.7
(22) Anmeldetag: 15.04.2020
(51) Int. Cl.: A01F 15/04, A01F 15/08

(54) **LANDWIRTSCHAFTLICHE BALLENPRESSE SOWIE VERFAHREN ZU DEREN BETRIEB**
AGRICULTURAL BALING PRESS AND METHOD FOR OPERATING SAME
PRESSE À BALLES AGRICOLE AINSI QUE SON PROCÉDÉ DE FONCTIONNEMENT

(30) Priorität: 23.07.2019 DE 102019119872
(43) Veröffentlichungstag der Anmeldung: 27.01.2021
(73) Patentinhaber: Usines CLAAS France S.A.S, 57140 St. Rémy / Woippy (FR)
(72) Erfinder: Rongvaux, Laurent, 54800 Tronville (FR); Arnould, Cyrille, 57645 Montoy-Flanville (FR); Leseur, Florentin, 52340 Ageville (FR)
(74) Vertreter: CLAAS Gruppe

(56) Entgegenhaltungen:
- EP-A2- 0 951 988
- DE-A1- 19 644 574
- DE-A1- 19 913 030
- DE-A1-102017 122 211

## Beschreibung

Die vorliegende Anmeldung betrifft eine landwirtschaftliche Ballenpresse gemäß dem Oberbegriff von Anspruch 1. Weiterhin betrifft die vorliegende Anmeldung ein Verfahren zum Betrieb einer landwirtschaftlichen Ballenpresse gemäß dem Oberbegriff von Anspruch 7.

Die Ballenpresse umfasst mindestens einen Antrieb, mittels dessen ein Verdichter antreibbar ist. Dieser umfasst mindestens eine Pleuelstange sowie einen Verdichterkolben, der innerhalb eines Hauptkanals zyklisch zwischen einer Ausholstellung und einer Pressstellung hin und her bewegbar ist. Auf diese Weise ist die Ballenpresse dazu geeignet, in den Hauptkanal eingebrachtes Erntegut sukzessive zu einem Ballen zu pressen, wobei in den Hauptkanal eingebrachtes Erntegut jeweils im Zuge einer Überführung des Verdichterkolbens in seine Pressstellung erfasst und gegen bereits gepresstes Erntegut gedrückt wird. Ausgehend von seiner Pressstellung wird der Verdichterkolben entlang des Hauptkanals zurück in eine Aushohlstellung gezogen, bevor er abermals in seine Pressstellung überführt wird. Bei Vorliegen in seiner Pressstellung ist der Verdichterkolben an einem distalen Ende des Hauptkanals angeordnet, der dem gepressten Erntegut zugewandt ist. Bei Vorliegen in seiner Ausholstellung ist der Verdichterkolben entsprechend an einem proximalen Ende des Hauptkanals angeordnet.

Das wiederholte "Schlagen" des Verdichterkolbens gegen das Erntegut führt zu der gewünschten Verdichtung des Ernteguts, wobei aufgrund einer Geometrie des Hauptkanals, der typischerweise einen rechteckigen Querschnitt aufweist, die allgemein übliche Quaderform des fertigen Ballens erzeugt wird. Zwecks Überführung von Erntegut in den Hauptkanal verfügt die Ballenpresse über eine Aufnahmeeinheit, mittels der Erntegut von einem Untergrund aufnehmbar ist. Hierbei kann das Erntegut mittels einer Häckseleinrichtung zerkleinert werden. Schließlich wird das Erntegut in einen Vorkanal überführt, indem es typischerweise mittels eines Vorverdichters, des sogenannten "Raffers", vorverdichtet wird. Mittels einer Übergabeeinheit wird das Erntegut schließlich in den Hauptkanal übergeben, wobei die Übergabeeinheit vorteilhafterweise von dem Vorverdichter gebildet sein kann. Eine solche Übergabeeinheit dient mithin sowohl der Vorverdichtung des Ernteguts als auch dessen Übergabe von dem Vorkanal in den Hauptkanal.

Die Pleuelstange, mittels der der Verdichterkolben in Kraft übertragender Weise mit dem Antrieb verbunden ist, ist längenveränderlich ausgeführt und von einer Kolben-Zylinder-Einheit gebildet. Als solche weist die Pleuelstange einen Antriebsabschnitt und einen Pressabschnitt auf, wobei der Antriebsabschnitt dem Antrieb bzw. der Antriebsseite der Pleuelstange und der Pressabschnitt dem Verdichterkolben bzw. der Kolbenseite der Pleuelstange zugeordnet sind. Gemeinsam begrenzen der Antriebsabschnitt und der Pressabschnitt mindestens einen Arbeitsraum, der insbesondere mit einem Arbeitsfluid, beispielsweise einem Hydrauliköl, füllbar ist. Weiterhin umfasst die Ballenpresse mindestens eine Halteeinrichtung, die mit dem Verdichterkolben verbindbar ist, sodass der Verdichterkolben während eines Betriebs der Ballenpresse in seiner Pressstellung haltbar ist. Mittels der Veränderlichkeit der Länge der Pleuelstange kann der Antrieb trotz dem Verbleib des Verdichterkolbens in seiner Pressstellung weiter betrieben werden, wobei die Länge der Pleuelstange zumindest für die Dauer der Haltung des Verdichterkolbens in seiner Pressstellung fortwährend verändert wird. Dabei kann der Antrieb insbesondere von einem Kurbelantrieb gebildet sein, der über einen um eine Antriebsachse rotierbaren Kurbelarm verfügt, an dessen der Drehachse abgewandtem Ende die Pleuelstange angeordnet ist. Eine Verbindung der Pleuelstange mit dem Verdichterkolben ist dabei vorzugsweise gelenkig ausgebildet, sodass eine Ausrichtung der Pleuelstange relativ zu dem Verdichterkolben veränderbar ist.

Ballenpressen der eingangs beschriebenen Art sind im Stand der Technik bereits bekannt. Hierzu wird beispielhaft auf die deutsche Patentanmeldung DE 10 2017 122 211 A1 verwiesen. Diese beschreibt eine Ballenpresse, die zum Zweck der Verminderung von Verschleiß sowie des Energieverbrauchs den Verdichterkolben "abkoppeln" kann, sodass diese lediglich dann zwischen seiner Pressstellung und seiner Aushohlstellung bewegt wird, wenn dies zum Zweck der Verdichtung neu in den Hauptkanal eingeführten Materials erforderlich ist. Im Übrigen kann der Verdichterkolben innerhalb des Hauptkanals still stehen, sodass die Leistungsaufnahme des Antriebs stark verringert ist. Insbesondere kann der Verdichterkolben hierbei im Bereich seiner Pressstellung belassen werden, wobei der Antrieb mitsamt der Pleuelstange fortlaufend bewegt werden.

Eine gattungsgemäße Ballenpresse ist aus der DE 196 44 574 A1 bekannt.

Eine weitere Ballenpresse ist aus der deutschen Patentanmeldung DE 199 13 030 A1 bekannt. Diese beschreibt eine Halteeinrichtung, mittels der der Verdichterkolben in seiner Pressstellung haltbar ist. Dies dient dazu, dass jeweils gepresste Erntegut mittels des anliegenden Verdichterkolbens zu stabilisieren und während eines Zeitraums, über den hinweg der Verdichterkolben an dem Erntegut anliegt, das heißt sich in seiner Pressstellung befindet, das Erntegut mittels einer Bindeeinrichtung zusammenzufassen, sodass schließlich der fertige Ballen gebildet wird. Um den Verdichterkolben in seiner Pressstellung zu belassen, wird er mittels der Halteeinrichtung formschlüssig erfasst, während der Antrieb mitsamt der Pleuelstange weiter betrieben werden kann. Damit dies gelingt, wird eine Kraft übertragende Verbindung zwischen der Pleuelstange und dem Verdichterkolben zumindest für einen Zyklus aufgehoben. Dies wird insbesondere mit einer Längenveränderlichkeit der Pleuelstange erreicht.

Bei der letztgenannten Ballenpresse hat es sich als nachteilig erwiesen, dass der Verdichterkolben, sobald er mittels der Halteeinrichtung in seiner Pressstellung gehalten wird, lediglich nach Ausführung eines vollständigen Zyklus des Antriebs wieder an die Pleuelstange angekoppelt werden kann. Ein Mitnehmen des Verdichterkolbens während eines laufenden Zyklus, das heißt insbesondere während einer Umdrehung des Kurbelarms des Antriebs, ist nicht möglich. Hierdurch kann der Betrieb der Ballenpresse verzögert werden, da für den Zeitraum, in dem sich der Verdichterkolben in seiner Pressstellung befindet, die Übergabe weiteren Ernteguts in den Hauptkanal nicht möglich ist. Hierzu ist es nämlich erforderlich, dass sich der Verdichterkolben - von dem gepressten Erntegut aus betrachtet - jenseits einer Übergabeöffnung befindet, durch die hindurch das Erntegut von dem Vorkanal in den Hauptkanal übergebbar ist. Nur bei einer zeitlich abgestimmten Übergabe des Ernteguts in den Hauptkanal kann letzteres im Zuge einer Bewegung des Verdichterkolbens in Richtung von dessen Pressstellung erfasst und gegen das bereits gepresste Erntegut gepresst werden. Gemäß dem Stand der Technik ist es mithin bei Verbleib des Verdichterkolbens in seiner Pressstellung zunächst notwendig, den Verdichterkolben wieder an den Antrieb zu koppeln und ihn in Richtung seiner Aushohlstellung zurück zu bewegen, sodass weiteres Erntegut in den Hauptkanal eingeführt werden kann.

Der vorliegenden Erfindung liegt mithin die Aufgabe zugrunde, eine Ballenpresse bereitzustellen, deren Betrieb gegenüber dem Stand der Technik geringeren Verzögerungen unterliegt.

Die zugrunde liegende Aufgabe wird erfindungsgemäß mittels einer Ballenpresse mit den Merkmalen des Anspruchs 1 gelöst. Vorteilhafte Ausgestaltungen ergeben sich aus den Unteransprüchen 2 bis 6.

Die erfindungsgemäße Ballenpresse umfasst mindestens einen Fluidspeicher, der strömungstechnisch mit dem Arbeitsraum der Pleuelstange verbunden ist. Der Fluidspeicher ist dabei dazu geeignet, ein Arbeitsfluid aufzunehmen, das im Zuge einer Längenänderung der Pleuelstange aus dem Arbeitsraum verdrängt wird. Der Fluidspeicher kann insbesondere von einem Hydraulikspeicher gebildet sein, der im Zuge der Aufnahme des jeweiligen Arbeitsfluids gespannt wird, wodurch das Arbeitsfluid unter Druck setzbar ist. Der Hydraulikspeicher kann hierzu beispielsweise mit einer dehnbaren Membran ausgebildet sein.

Der Erfindung liegt die Überlegung zugrunde, den Verdichterkolben lediglich für einen kurzen Zeitraum in seiner Pressstellung zu halten, um jeweilig gepresstes Erntegut mittels der Bindeeinrichtung zu einem Ballen zu binden und dabei den in seiner Pressstellung gehaltenen Verdichterkolben zur Aufrechterhaltung des Pressdrucks beizubehalten. Insoweit folgt die Erfindung dem Stand der Technik. Zur Vermeidung der im Stand der Technik zu beklagenden Verzögerung soll jedoch der Verdichterkolben nicht erst dann wieder zurück in Richtung seiner Aushohlstellung bewegt werden, wenn der Antrieb eine vollständige Umdrehung ausgeführt hat und den in seiner Pressstellung stehen gebliebenen Verdichterkolben gewissermaßen "abholt". Stattdessen soll der Verdichterkolben unabhängig von dem Antrieb in Richtung seiner Aushohlstellung bewegt werden, sodass idealerweise während derselben Umdrehung des Antriebs, die sich unmittelbar an das Verbleiben des Verdichterkolbens in der Pressstellung anschließt, bereits weiteres Erntegut in den Hauptkanal überführt und unmittelbar mittels des sich in Richtung seiner Pressstellung bewegenden Verdichterkolbens erfasst und gepresst werden kann. Der Verdichterkolben soll zumindest so weit in Richtung seiner Aushohlstellung bewegt werden, dass er eine Übergabeöffnung passiert, durch die hindurch das Erntegut von dem Vorkanal in den Hauptkanal übergeben wird.

Der erfindungsgemäß vorgesehene Fluidspeicher ermöglicht eine ebensolche Bewegung des Verdichterkolbens, indem das unter Druck stehende Arbeitsfluid nach seiner Verdrängung aus dem Arbeitsraum der Pleuelstange, die als Folge des Haltens des Verdichterkolbens in seiner Pressstellung und der damit einhergehenden Längung der Pleuelstange auftritt, zurück in den Arbeitsraum gedrückt wird. Hierdurch wird die Pleuelstange, die sich zuvor infolge des weiteren Betriebs des Antriebs bei stehen bleibendem Verdichterkolben gelängt hat, wieder verkürzt, wobei der Fluiddruck des Arbeitsfluids die Bewegung des Verdichterkolbens in Richtung seiner Aushohlstellung antreibt. Insbesondere ist es denkbar, dass das Arbeitsfluid in einen zwischen einem als Pressabschnitt ausgebildeten Kolben und einem als Arbeitsabschnitt ausgebildeten Zylinder der Pleuelstange gebildeten Ringraum geleitet wird, wobei infolge des Drucks des Arbeitsfluids der Pressabschnitt (Kolben) in den Antriebsabschnitt (Zylinder) gedrückt wird, sodass der Kolben in den Zylinder einfährt. Dies entspricht einer Verkürzung der Pleuelstange, die wiederum aufgrund der festen Anbringung der Pleuelstange an dem Antrieb zwangsweise zu einer Bewegung des beweglichen Verdichterkolbens führt, der sich mithin in Richtung seiner Aushohlstellung bewegt. Aufgrund des Drucks, unter dem das Antriebsfluid in dem Fluidspeicher gespeichert ist, kann mittels einer schlagartigen Überführung des Antriebsfluids in den Arbeitsraum gleichermaßen die Bewegung des Verdichterkolbens schlagartig erfolgen, sodass dieser "rechtzeitig" jenseits der

Übergabeöffnung zwischen Vorkanal und Hauptkanal vorliegt und mithin während derselben Umdrehung des Antriebs trotz ursprünglich festgehaltenem Verdichterkolben noch Erntegut in den Hauptkanal übergeben werden kann. Dieses Erntegut kann der Verdichterkolben sodann erfassen und im Zuge seiner sich unmittelbar anschließenden Überführung in seine Pressstellung pressen. Folglich wird mittels der erfindungsgemäßen Ballenpresse die Möglichkeit geschaffen, den Vorteil des in seiner Pressstellung verbleibenden Verdichterkolbens zwecks Bindung eines fertig gestellten Ballens zu erwirken, ohne hierdurch den Nachteil einer verzögerten weiteren Bearbeitung weiteren Ernteguts in Kauf nehmen zu müssen. Insbesondere muss nicht erst eine volle Umdrehung des Antriebs abgewartet werden, bevor der Verdichterkolben ausgehend von seiner Pressstellung wieder in Richtung seiner Ausholstellung bewegt wird.

In einer vorteilhaften Ausgestaltung der erfindungsgemäßen Ballenpresse wirkt die Pleuelstange mit mindestens einer Ventileinrichtung zusammen, mittels der ein Zufluss des Arbeitsfluids in den Arbeitsraum hinein und/oder ein Abfluss des Arbeitsfluids aus dem Arbeitsraum hinaus steuerbar ist. Eine solche Ventileinrichtung kann besonders vorteilhaft sein, um eine zuverlässige Kraftübertragung von der Pleuelstange auf den Verdichterkolben sicherzustellen für den Fall, dass der Verdichterkolben nicht mittels der Halteeinrichtung in seiner Pressstellung gehalten wird. Zur Bewegung des Verdichterkolbens zurück in Richtung seiner Aushohlstellung muss letzterer mittels der Pleuelstange in dem Hauptkanal "zurückgezogen" werden, wobei eine Längung der Pleuelstange unterbleiben soll. Die Ventileinrichtung sollte sich daher zumindest so lange in einer Schließstellung befinden, bis der Verdichterkolben planmäßig in der Pressstellung verbleiben soll. Auf diese Weise wird ein Austritt des Arbeitsfluids aus dem Arbeitsraum vermieden, wodurch eine Bewegung des Pressabschnitts relativ zu dem Antriebsabschnitt der Pleuelstange unterbunden ist. Um den Abfluss des Arbeitsfluids aus dem Arbeitsraum zuzulassen, ist es dann erforderlich, die Ventileinrichtung in eine Offenstellung zu überführen, sodass das Arbeitsfluid aus dem Arbeitsraum entweichen und in den Fluidspeicher strömen und die Pleuelstange sich längen können.

Grundsätzlich ist eine vorstehend beschriebene Ventileinrichtung jedoch nicht zwingend erforderlich. Dies gilt insbesondere dann, wenn der Fluidspeicher selbst dann einen nennenswerten Fluiddruck auf das mit ihm in Wirkverbindung stehende hydraulische System (das heißt insbesondere den Arbeitsraum der Pleuelstange) ausübt, dass die Massenträgheit des Verdichterkolbens im Zuge seiner Bewegungsumkehr bei Erreichen seiner Pressstellung nicht ausreicht, um in ungewollter Weise das Arbeitsfluid aus dem Arbeitsraum der Pleuelstange zu verdrängen und auf diese Weise eine Längung der Pleuelstange herbeizuführen. Letzteres würde damit einhergehen, dass der Verdichterkolben nicht oder zumindest nicht in ausreichendem Maße wieder in die seiner Ausholstellung zugewandten Bewegungsrichtung beschleunigt wird, was - sofern der Verdichterkolben nicht in seiner Pressstellung gehalten werden soll - nicht erwünscht ist. Mithin ist eine solche Ausgestaltung der Ballenpresse vorteilhaft, bei der ein mit der Pleuelstange zusammenwirkendes Hydrauliksystem bei Vorliegen der Pleuelstange in einem Kurzzustand, in dem die Länge der Pleuelstange minimal ist, derart vorgespannt ist, sodass eine Verdrängung eines Hydraulikfluids aus dem Arbeitsraum der Pleuelstange heraus sowie eine damit einhergehende Längung der Pleuelstange nicht in unbeabsichtigter Weise auftritt. Eine genaue Festlegung der Vorspannung, das heißt des in dem Hydrauliksystem vorliegenden Drucks, kann im technischen Einzelfall ausgelegt werden, um den beschriebenen technischen Effekt zu erzielen. Die Vorspannung des Hydrauliksystems kann in besonders vorteilhafter Weise mittels des Fluidspeichers vorgenommen werden.

Erfindungsgemäß umfasst die Ballenpresse mindestens eine Steuerungseinrichtung, mittels der die Halteeinrichtung steuerbar und hierdurch zumindest mittelbar zwischen einem Haltezustand und einem Freizustand überführbar ist. Bei Vorliegen in ihrem Haltezustand ist die Halteeinrichtung dazu geeignet, den Verdichterkolben in seiner Pressstellung zu halten. Demgegenüber gibt die Halteeinrichtung den Verdichterkolben bei Vorliegen in ihrem Freizustand frei, sodass er unmittelbar nach Erreichen seiner Pressstellung wieder zurück in Richtung seiner Aushohlstellung bewegbar ist. Die Halteeinrichtung kann insbesondere einen Greifarm umfassen, der mittels einer Drehbewegung zwischen seinem Haltezustand und seinem Freizustand überführbar ist, wobei eine Kraft übertragende Verbindung zwischen der Halteeinrichtung und dem Verdichterkolben vorzugsweise unter Ausbildung eines Formschlusses erfolgt. Insbesondere kann der Greifarm der Halteeinrichtung eine komplementäre Haltestange des Verdichterkolbens formschlüssig umgreifen.

Erfindungsgemäß ist es vorgesehen, dass die Steuerungseinrichtung in Wirkverbindung mit einer Bindeeinrichtung der Ballenpresse steht, insbesondere mit einer Antriebswelle der Bindeeinrichtung. Auf diese Weise ist es möglich, mittels der Steuerungseinrichtung die Überführung der Halteeinrichtung zwischen ihrem Haltezustand und ihrem Freizustand in Abhängigkeit eines Betriebs der Bindeeinrichtung vorzunehmen. Die Koordination eines Bindevorgangs, der mittels der Bindeeinrichtung ausgeführt wird, und der Haltung des Verdichterkolbens in seiner Pressstellung ist gemäß vorstehender Beschreibung besonders vorteilhaft, um einen Presszustand des verdichteten Materials mittels des anliegenden Verdichterkolbens so lange zu bewahren, bis das Material mittels der Bindeeinrichtung zu einem jeweiligen Ballen zusammengefasst ist.

Die erfindungsgemäße Ballenpresse weiter ausgestaltend ist die Halteeinrichtung mittels mindestens eines Hydraulikzylinders hydraulisch betreibbar. Insbesondere kann die Halteeinrichtung mittels des Hydraulikzylinders in ihren Freizustand überführbar sein, wobei weiter vorzugsweise die Halteeinrichtung unter Einwirkung einer vorgespannten mechanischen Feder im Übrigen in ihrem Haltezustand gehalten ist.

In einer besonders vorteilhaften Ausführungsform der erfindungsgemäßen Ballenpresse sind die Pleuelstange und die Halteeinrichtung an ein gemeinsames Hydrauliksystem angeschlossen. Diese Ausführung bietet den besonderen Vorteil, dass die Betätigung der Halteeinrichtung unmittelbar hydraulisch mit einer etwaigen Längenänderung der Pleuelstange sowie mit dem Fluidspeicher gekoppelt werden kann. Dies ist angesichts der systematischen Verbundenheit der Betätigung der Halteeinrichtung und der Längenänderung der Pleuelstange besonders sinnvoll. Hierzu umfasst das Hydrauliksystem vorzugsweise mindestens ein Steuerventil, mittels dessen eine strömungstechnische Verbindung zwischen der Pleuelstange und dem Hydraulikzylinder der Halteeinrichtung wechselweise freigebbar und sperrbar ist.

Die beschriebene Ausgestaltung ist weiterhin dann von besonderem Vorteil, wenn das Steuerventil mit einer Steuerungseinrichtung verbunden ist, sodass das Steuerventil mittels der Steuerungseinrichtung steuerbar ist. Auf diese Weise kann die Überführung der Halteeinrichtung zwischen ihrem Freizustand und ihrem Haltezustand besonders einfach mit einer Längung der Pleuelstange koordiniert werden.

Alternativ hierzu ist es ebenso denkbar, dass die Pleuelstange und die Halteeinrichtung jeweils eigenen, voneinander unabhängigen Hydrauliksystemen zugeordnet sind. Eine Synchronisation der Betätigung der Halteeinrichtung zwecks deren Überführung in ihren Freizustand und der damit verbundenen Freigabe des Verdichterkolbens und der Verkürzung der Pleuelstange zwecks Beschleunigung des Verdichterkolbens in Richtung seiner Ausholstellung kann mittels einer Steuerungseinrichtung erfolgen, die mindestens ein entsprechendes Steuerventil, vorzugsweise mehrere Steuerventile, ansteuert. Besagtes Steuerventil ist dabei vorzugsweise dem Hydrauliksystem zugeordnet, das mit der Halteeinrichtung zusammenwirkt. Die Steuerungseinrichtung kann insbesondere mit mindestens einer Sensoreinrichtung, vorzugsweise einem Bildsensor, zusammenwirken, um eine Stellung des Verdichterkolbens in dem Hauptkanal zu erfassen und basierend darauf die Halteeinrichtung zu steuern.

Unabhängig davon, ob Pleuelstange und Halteeinrichtung demselben oder getrennten Hydrauliksystemen zugeordnet sind, kann es besonders vorteilhaft sein, wenn zumindest das mit der Halteeinrichtung zusammenwirkende Hydrauliksystem mindestens ein zweites Steuerventil umfasst, das mit dem ersten Steuerventil in Reihe geschaltet ist. Hierbei sind vorzugsweise das erste Steuerventil elektrisch und das zweite Steuerventil mechanisch schaltbar. Die mechanische Schaltung kann in besonders vorteilhafter Weise mit der Bindeeinrichtung gekoppelt sein, wobei beispielsweise eine Antriebsachse der Bindeeinrichtung mit einer Nockenscheibe ausgestattet sein kann. Diese Nockenscheibe ist sodann dazu geeignet, im Zuge einer Rotation der Antriebsachse der Bindeeinrichtung ein mechanisches Steuerventil regelmäßig zu betätigen. Die Bindeeinrichtung kann zudem mit einer Sensoreinrichtung ausgestattet sein, die Daten erfasst und an die Steuerungseinrichtung leitet.

Vorzugsweise umfasst die erfindungsgemäße Ballenpresse mindestens eine Sensoreinrichtung, mittels der eine Stellung des Verdichterkolbens in dem Hauptkanal erfassbar ist. Mittels einer solchen Sensoreinrichtung erfasste Daten sind an die Steuerungseinrichtung leitbar, sodass eine zeitliche Steuerung eines Haltens und Freigebens des Verdichterkolbens besonders einfach vorgenommen werden kann. Die Steuerungseinrichtung kann dabei insbesondere mit einem elektrischen Steuerventil zusammenwirken, mittels dessen ein Fluss des Arbeitsfluids beeinflussbar ist. Die Sensoreinrichtung kann insbesondere von einem Bildsensor gebildet sein.

Die zugrunde liegende Aufgabe wird ferner erfindungsgemäß mittels eines Verfahrens mit den Merkmalen des Anspruchs 7 gelöst. Vorteilhafte Ausgestaltungen ergeben sich aus den Unteransprüchen 8 bis 13.

Das erfindungsgemäße Verfahren umfasst, dass die Halteeinrichtung, mittels der der Verdichterkolben in seiner Pressstellung gehalten wird, erst nach Beginn eines jeweiligen Verdichtungszyklus ausgehend von ihrem Haltezustand in ihren Freizustand überführt wird. Erfindungsgemäß wird der Verdichterkolben freigegeben, sobald verdichtetes Erntegut mittels einer Bindeeinrichtung zusammengefasst ist. Der Verdichtungszyklus umfasst dabei im Sinne der vorliegenden Anmeldung eine vollständige Umdrehung des Antriebs, wobei ein jeweiliger Verdichtungszyklus mit Vorliegen des Verdichterkolbens in seiner Pressstellung beginnt und mit der abermaligen Ankunft des Verdichterkolbens in seiner Pressstellung endet. Typischerweise wird der Verdichterkolben während eines Verdichtungszyklus mittels des Antriebs ausgehend von seiner Pressstellung vollständig bis in seine Aushohlstellung und wieder zurück in seine Pressstellung bewegt. Sofern eine Halteeinrichtung zum Einsatz kommt, wird ein Verdichterkolben gemäß dem Stand der Technik unmittelbar zu Anfang eines jeweiligen Verdichtungszyklus freigegeben, sodass der Verdichterkolben den vollständigen Verdichtungszyklus durchlaufen kann. Erfindungsgemäß findet eben dieses Freigeben des Verdichterkolbens zu Beginn des Verdichtungszyklus nicht statt. Stattdessen wird der Verdichterkolben erst nach Beginn des Verdichtungszyklus freigegeben und in Richtung seiner Aushohlstellung bewegt. Erfindungsgemäß wird der Verdichterkolben freigegeben, sobald verdichtetes Erntegut mittels einer Bindeeinrichtung zusammengefasst ist.

Hierdurch wird der erfindungsgemäße Vorteil erzielt, dass der Verdichterkolben zumindest zeitweise an dem gepressten Erntegut anliegt und einen Pressdruck auf das Erntegut ausübt, sodass das Erntegut mittels einer Bindeeinrichtung zu einem Ballen gebunden werden kann, jedoch gleichwohl noch während des Verdichtungszyklus, der während der Bindung des Ballens begonnen wird, wieder so weit in dem Hauptkanal in Richtung seiner Aushohlstellung bewegt wird, dass eine Übergabe weiteren Ernteguts von dem Vorkanal in den Hauptkanal möglich ist. Idealerweise wird der Verdichterkolben vollständig bis in seiner Aushohlstellung bewegt.

Das erfindungsgemäße Verfahren ist mittels der erfindungsgemäßen Ballenpresse besonders einfach ausführbar. Die sich hierdurch ergebenden Vorteile sind vorstehend bereits im Zusammenhang mit der erfindungsgemäßen Ballenpresse dargelegt.

In einer besonders vorteilhaften Ausgestaltung des erfindungsgemäßen Verfahrens wird die Bewegung des freigegebenen Verdichterkolbens in Richtung seiner Aushohlstellung mittels eines hydraulischen Betriebs der Pleuelstange angetrieben. Hierzu ist es besonders vorteilhaft, wenn im Zuge einer Längung der Pleuelstange, die infolge des Haltens des Verdichterkolbens in seiner Pressstellung auftritt, ein Arbeitsfluid aus einem Arbeitsraum der Pleuelstange verdrängt und in einen Fluidspeicher geleitet wird. Dieser Fluidspeicher ist dabei derart ausgebildet, dass er infolge des ihm zugeleiteten Arbeitsfluids (ggf. zusätzlich) gespannt wird, sodass das in dem Fluidspeicher vorgehaltene Arbeitsfluid unter Druck steht. Der Fluidspeicher kann dabei grundsätzlich bereits vorgespannt sein. Die auf diese Weise (zusätzliche) gespeicherte hydraulische Energie wird sodann vorteilhafterweise für den Antrieb des Verdichterkolbens verwendet, wobei das Arbeitsfluid insbesondere schlagartig zurück in den Arbeitsraum der Pleuelstange geleitet werden kann, wodurch selbige verkürzt wird. Diese Verkürzung geht unmittelbar mit einer Bewegung des Verdichterkolbens in Richtung seiner Aushohlstellung einher.

Das Verfahren ist ferner dann besonders vorteilhaft, wenn der Verdichterkolben während des jeweiligen Verdichtungszyklus derart ausgehend von seiner Pressstellung in Richtung seiner Aushohlstellung bewegt wird, dass die Länge der Pleuelstange spätestens bis zur Vollendung der ersten Hälfte des Verdichtungszyklus reduziert wird. Mit anderen Worten beginnt die Bewegung des Verdichterkolbens in Richtung seiner Aushohlstellung vorzugsweise während der ersten Hälfte des Verdichtungszyklus. Sofern der Antrieb des Verdichterkolbens in einer in der Technik üblichen Weise einen um eine Antriebsachse drehangetriebenen Kurbelarm aufweist, fällt ein Verdichtungszyklus mit einer Umdrehung des Kurbelarms um die Antriebsachse zusammen. Die Bewegung des Verdichterkolbens in Richtung seiner Aushohlstellung findet demnach vorzugsweise vor dem Abschluss einer ersten halben Umdrehung des Antriebs ab Beginn des jeweiligen Verdichtungszyklus statt. Vorteilhafterweise erreicht die Pleuelstange während der ersten Hälfte des Verdichtungszyklus ihren Kurzzustand. Die ist gleichbedeutend damit, dass der Verdichterkolben seiner Aushohlstellung erreicht, das heißt seinen proximalen Totpunkt innerhalb des Hauptkanals. Dieser ist nur erreichbar, wenn die Pleuelstange in ihrem Kurzzustand vorliegt, das heißt in ihrem Zustand geringster Länge. Diese Verfahrensweise ist besonders vorteilhaft, um zum einen die Übergabeöffnung zwischen dem Vorkanal und dem Hauptkanal zuverlässig für die Übergabe weiteren Ernteguts freizugeben und zum anderen eine ausreichende Beschleunigung des Verdichterkolbens in der zweiten Hälfte des Verdichtungszyklus zu erwirken, sodass die Pressleistung des Verdichterkolbens maximal ist.

Schließlich ist eine solche Verfahrensweise besonders vorteilhaft, bei der während desselben Verdichtungszyklus, der mit dem Halten des Verdichterkolbens in seiner Pressstellung beginnt und im Zuge dessen der Verdichterkolben in Richtung seiner Aushohlstellung bewegt wird, Erntegut mittels einer Übergabeeinrichtung ausgehend von einem Vorkanal an den Hauptkanal übergeben wird. Diese Übergabe des Ernteguts findet vorteilhafterweise während der zweiten Hälfte des Verdichtungszyklus, weiter vorzugsweise zu Beginn der zweiten Hälfte des Verdichtungszyklus, statt.

Die Erfindung ist nachstehend anhand eines Ausführungsbeispiels, das in den Figuren dargestellt ist, näher erläutert. Es zeigt:
- Fig. 1:: Einen Querschnitt durch eine Ballenpresse gemäß dem Stand der Technik,
- Fig. 2:: Eine schematische Darstellung eines Antriebs einer erfindungsgemäßen Ballenpresse mit einem mittels einer Pleuelstange an den Antrieb angeschlossenen Verdichterkolben, wobei der Verdichterkolben in einer Pressstellung vorliegt,
- Fig. 3:: Die Darstellung gemäß Figur 2, wobei der Verdichterkolben trotz weiteren Betrieb des Antriebs in seiner Pressstellung gehalten ist,
- Fig. 4:: Ein schematisches hydraulisches Schaltbild eines Hydrauliksystems einer erfindungsgemäßen Ballenpresse sowie
- Fig. 5:: Eine weitere Darstellung des hydraulischen Schaltbilds gemäß Figur 4.

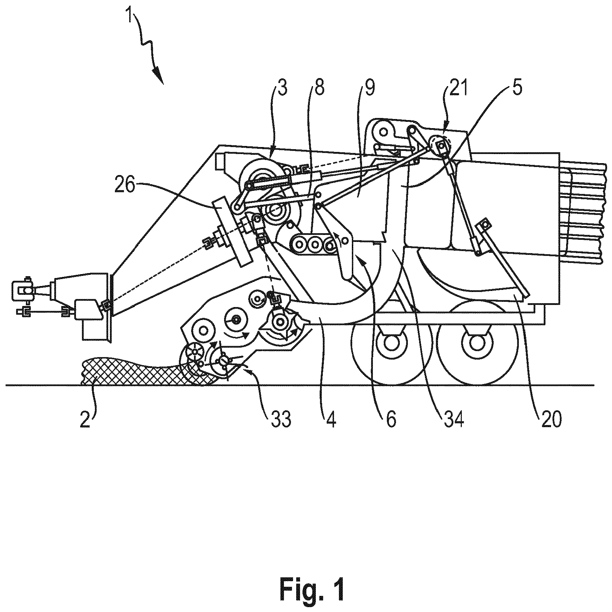

Die vorliegende Erfindung betrifft eine Ballenpresse **1**, die schematisch in **Figur 1** dargestellt ist und aus dem Stand der Technik bekannt ist. Diese umfasst einen Antrieb **3**, der mittels einer Pleuelstange **8** mit einem Verdichterkolben **9** zusammenwirkt. Der Antrieb **3** wirkt mit einem Schwungrad **26** zusammen, mittels dessen auf den Antrieb **3** wirkende Lastspitzen überwindbar sind. Mittels Betriebs des Antriebs **3** ist der Verdichterkolben **8** innerhalb eines Hauptkanals **5** zyklisch zwischen einer Pressstellung und einer Aushohlstellung bewegbar. Hierdurch ist es möglich, aufgenommenes Erntegut **2** zu einem quaderförmigen Ballen zu pressen. Hierzu wird das Erntegut **2** zunächst mittels einer Aufnahmeeinrichtung **33** von einem Untergrund aufgenommen und einem Vorkanal **4** zugeführt. In dem Vorkanal **4** wird das Erntegut zunächst mittels einer Übergabeeinrichtung **6** vorverdichtet und sodann durch eine Übergabeöffnung **34** hindurch in den Hauptkanal **5** übergeben. Die Ballenpresse **1** umfasst ferner eine in der Einrichtung **21**, die mindestens eine Bindenadel **20** umfasst. Mittels letzterer ist es möglich, gepresstes Erntegut **2** mittels einer Bindeschnur zusammenzufassen und auf diese Weise einen jeweiligen Ballen zu bilden.

Eine erfindungsgemäße Ballenpresse **1** ist im Wesentlichen gleich zu der bekannten Ballenpresse **1** gemäß **Figur 1** aufgebaut. Im Unterschied verfügt eine erfindungsgemäße Ballenpresse **1** jedoch über eine längenveränderliche Pleuelstange **8**, die einen Antriebsabschnitt **11** und einen Pressabschnitt **12** umfasst. Die Pleuelstange **8** ist hier in Form einer Kolben-Zylinder-Einheit ausgebildet, wobei der Antriebsabschnitt **11** den Zylinder und der Pressabschnitt **12** den Kolben bilden. Gemeinsam begrenzen der Antriebsabschnitt **11** und der Pressabschnitt **12** einen Arbeitsraum **13**, der mit einem Arbeitsfluid, das insbesondere von einem Hydrauliköl gebildet sein kann, gefüllt werden kann bzw. gefüllt ist. Der Arbeitsraum **13** ist in dem gezeigten Beispiel von einem Ringraum gebildet, der den Pressabschnitt **12** radial umgibt. Somit ist ein Volumen des Arbeitsraums **13** bei Vorliegen der Pleuelstange **8** in einem Kurzzustand, in dem eine Länge **16** der Pleuelstange **8** minimal ist, maximal, während das Volumen des Arbeitsraums **13** bei Vorliegen der Pleuelstange 8 in einem Langzustand, in dem die Länge **16** der Pleuelstange **8** maximal ist, minimal ist.

An einem dem Antrieb **3** zugewandten Ende ist die Pleuelstange **8** gelenkig an einen Kurbelarm **24** angeschlossen, der wiederum mit einer Antriebswelle **23** gekoppelt ist. An ihrem gegenüberliegenden Ende ist die Pleuelstange **8** gleichermaßen gelenkig mit dem Verdichterkolben **9** verbunden, wobei die Pleuelstange **8** um eine Drehachse **25** relativ zu dem Verdichterkolben **9** verdrehbar ist. Auf diese Weise wirkt die Pleuelstange **8** gewissermaßen als Pendelstab, mittels dessen eine Übertragung von Normalkräften zwischen dem Kurbelarm **24** und dem Verdichterkolben **9** möglich ist, Biegemomente jedoch nicht auftreten.

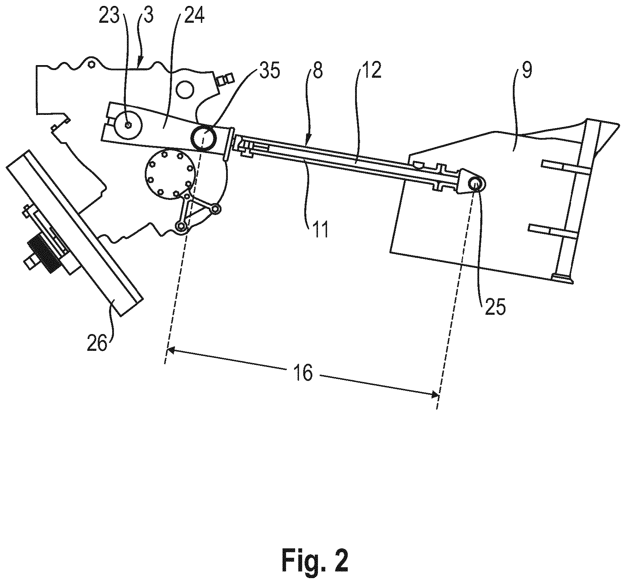

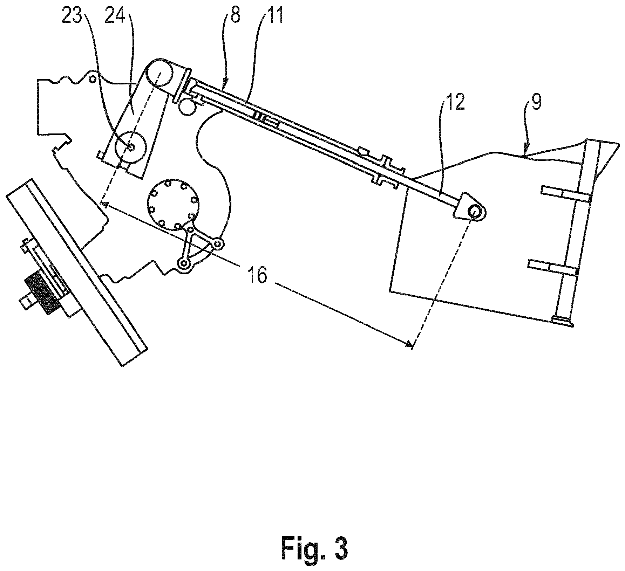

Mittels des Antriebs **3** ist der Verdichterkolben **9** zyklisch innerhalb des in den **Figuren 2 und 3** nicht dargestellten Hauptkanals **5** zwischen einer Pressstellung und einer Aushohlstellung bewegbar, wobei der Verdichterkolben **9** bei Vorliegen in seiner Pressstellung, die in **Figur 2** veranschaulicht ist, an einem dem Antrieb **3** abgewandten distalen Totpunkt innerhalb des Hauptkanals **5** und bei Vorliegen in seiner Aushohlstellung an einem proximalen, dem Antrieb **3** zugewandten Totpunkt innerhalb des Hauptkanals **5** angeordnet ist. Bei Vorliegen des Verdichterkolbens **9** in seiner Pressstellung sind der Kurbelarm **24** und die Pleuelstange **8** bezogen auf die Antriebswelle **23** parallel zueinander ausgerichtet, sodass ein Abstand zwischen einem distalen Ende **35** des Kurbelarms **24** und dem Verdichterkolben **9** minimal ist.

Die erfindungsgemäße Ballenpresse **1** verfügt ferner über zwei Halteeinrichtungen **10**, mittels derer der Verdichterkolben **9** in seiner Pressstellung haltbar ist. Dies hat zur Folge, dass der Verdichterkolben **9** trotz einem weiteren Betrieb des Antriebs **3** und einer damit einhergehenden Umdrehung des Kurbelarms **24** um die Antriebsachse **23** nicht ausgehend von seiner Pressstellung in Richtung seiner Aushohlstellung in dem Hauptkanal **5** zurückgezogen wird. Hierzu greifen die Halteeinrichtungen **10** jeweils auf einer Seite des Verdichterkolbens **9** formschlüssig mit komplementären Haltestangen, die in den Figuren nicht dargestellt sind, ein und fixieren den Verdichterkolben **9** auf diese Weise in seiner Pressstellung. Da der Antrieb **3** trotz dieses Haltens des Verdichterkolbens **9** weiter betrieben wird, tritt eine Längung der Pleuelstange **8** auf. Diese besteht darin, dass der Pressabschnitt **12** der Pleuelstange **8** relativ zu dem Antriebsabschnitt **11** bewegt wird, wobei der hier kolbenförmige Pressabschnitt **12** aus dem hier zylinderförmigen Antriebsabschnitt **11** herausgezogen wird. Dies ist besonders gut anhand von **Figur 3** erkennbar.

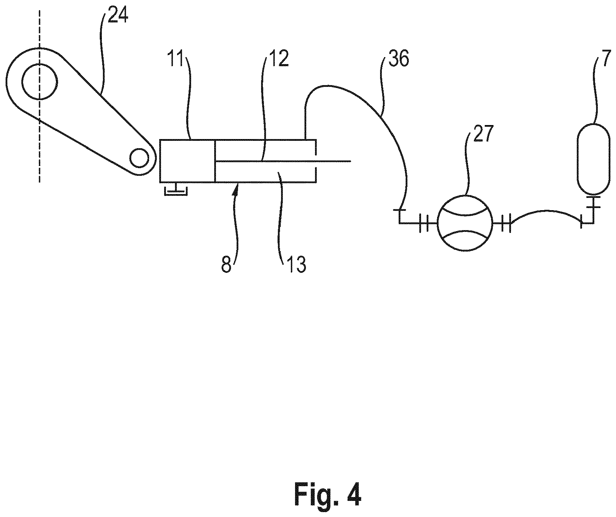

Im Zuge der beschriebenen Relativbewegung des Pressabschnitts **12** und des Antriebsabschnitts **11** wird der Arbeitsraum **13** verkleinert, wobei das in dem Arbeitsraum **13** vorhandene Arbeitsfluid entweichen muss. Erfindungsgemäß ist der Arbeitsraum **13** strömungstechnisch mit einem Fluidspeicher **7** verbunden, der in dem gezeigten Beispiel von einem spannbaren Hydraulikspeicher gebildet ist. Dies ist besonders gut anhand des schematischen Schaltbildes gemäß **Figur 4** erkennbar. Eine Hydraulikleitung **36**, die den Arbeitsraum **13** mit dem Fluidspeicher **7** verbindet, ist hier zudem mit einem Volumenstrommessgerät **27** ausgestattet, mittels dessen ein Volumenstrom des Arbeitsfluids zwischen dem Arbeitsraum **13** und dem Fluidspeicher **7** messbar ist. Der Fluidspeicher **7** ist hier derart ausgebildet, dass er im Zuge der Einströmung des Arbeitsfluids einen zusätzlichen Gegendruck aufbaut, sodass das Arbeitsfluid unter Druck stehend in dem Fluidspeicher **7** gespeichert ist. Der Fluidspeicher **7** wirkt mithin gewissermaßen wie eine "hydraulische Feder", die infolge der Verdrängung des Arbeitsfluids aus dem Arbeitsraum **13** zusätzlich vorgespannt ist. Dabei ist die gezeigte Ballenpresse **1** derart ausgebildet, dass der Fluidspeicher **7** auch dann vorgespannt ist und einen Druck auf das Arbeitsfluid ausübt, wenn die Pleuelstange **8** in ihrem Kurzzustand vorliegt. Diese Vorspannung ist hier von Bedeutung, um eine unbeabsichtigte Längung der Pleuelstange **8** zu vermeiden, die ansonsten bei einem "normalen" Zurückziehen des Verdichterkolbens **9** von seiner Pressstellung in seine Ausholstellung infolge der Massenträgheit des Verdichterkolbens **9** auftreten könnte. Da das Arbeitsfluid jedoch infolge der Vorspannung des Fluidspeichers **7** unter Druck steht ist, wird diesem unbeabsichtigten Austritt des Arbeitsfluids entgegengewirkt. Dieser Austritt tritt mithin erst dann auf, wenn der Verdichterkolben **9** mittels der Halteeinrichtungen **10** in seiner Pressstellung zwingend gehalten wird, sodass das Arbeitsfluid sogar entgegen der Vorspannung des Fluidspeichers **7** aus dem Arbeitsraum **13** verdrängt wird. Die Vorspannung des Fluidspeichers **7** hat zudem den Vorteil, dass das Arbeitsfluid bei Lösen der Halteeinrichtungen **10** schlagartig, das heißt mit hohem Druck, in den Arbeitsraum **13** gedrückt wird, wodurch eine wunschgemäß hohe Beschleunigung des Verdichterkolbens **9** in Richtung seiner Ausholstellung bewirkt wird.

Der Verbleib des Verdichterkolbens **9** in seiner Pressstellung bewirkt, dass das gepresste Erntegut **2** unter einem Pressdruck gehalten wird. Dies ist besonders günstig, um das Erntegut **2** mittels der Bindeeinrichtung **21** zu einem fertigen Ballen zu binden. Hierbei wird der Antrieb **3** der Ballenpresse **1** weiter betrieben. Um den Hauptkanal **5** und insbesondere die Übergabeöffnung **34** freizugeben, sodass weiteres Erntegut **2** in den Hauptkanal **5** übergeben werden kann, muss der Verdichterkolben **9** in Richtung seiner Aushohlstellung bewegt werden. Gegenüber dem Stand der Technik wird dies erfindungsgemäß vorgenommen, bevor der Verdichtungszyklus, der mit dem Halten des Verdichterkolbens **9** in seiner Pressstellung beginnt, beendet wird, sodass zum weiteren Betrieb der Ballenpresse **1** nicht erst ein vollständiger Verdichtungszyklus, das heißt eine vollständige Umdrehung des Antriebs **3**, abgewartet werden muss, bis weiteres Erntegut **2** in den Hauptkanal **5** übergeben werden kann. Um den Verdichterkolben **9** in Richtung seiner Aushohlstellung zu bewegen, wird das in dem Fluidspeicher **7** vorgespannte Arbeitsfluid zurück in den Arbeitsraum **13** der Pleuelstange **8** geleitet, woraufhin der als Kolben ausgebildete Pressabschnitt **12** in den als Zylinder ausgebildeten Antriebsabschnitt **11** gedrückt und im Zuge dessen die Länge **16** der Pleuelstange **8** verringert werden. Dies hat unmittelbar zur Folge, dass der Verdichterkolben **9** in Richtung seiner Aushohlstellung bewegt wird, was insbesondere nach Abschluss des Bindens des jeweilig letzten Ballens erfolgen kann. In dem gezeigten Beispiel ist dieses Vorgehen zeitlich derart gesteuert, dass der Verdichterkolben **9** mit Beendigung einer halben Umdrehung des Antriebs **3**, das heißt mit Ende der ersten Hälfte des Verdichtungszyklus, in seiner Aushohlstellung angelangt und mithin die Pleuelstange **8** ihren Kurzzustand einnimmt. Der Verdichterkolben **9** ist daraufhin in üblicher Weise mittels der Pleuelstange **8** mit dem Antrieb **3** verbunden und kann wie gewohnt zyklisch zwischen seiner Pressstellung und seiner Aushohlstellung bewegt werden.

Da der Verdichterkolben **9** bereits mit Ende der ersten Hälfte des Verdichtungszyklus in seiner Aushohlstellung angelangt ist und mithin die Übergabeöffnung **34** freigegeben hat, wird im weiteren Verlauf des laufenden Verdichtungszyklus neues Erntegut **2** ausgehend von dem Vorkanal **4** mittels der Übergabeeinrichtung **6** in den Hauptkanal **5** überführt. Dieses Erntegut **2** wird sodann während der zweiten Hälfte des Verdichtungszyklus von dem sich ausgehend von seiner Aushohlstellung in Richtung seiner Pressstellung bewegenden Verdichterkolbens **9** erfasst, sodass ohne zeitlichen Verzug unmittelbar ein weiterer Ballen gebildet werden kann.

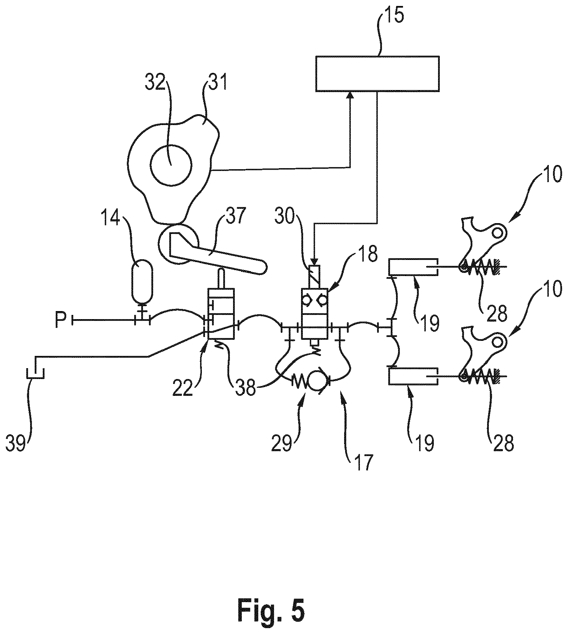

Die Steuerung der Halteeinrichtungen **10** und der Pleuelstange **8** kann in besonders vorteilhafter Weise mittels eines Hydrauliksystems **17** vorgenommen werden, das in **Figur 5** veranschaulicht ist. Das Hydrauliksystem verfügt über zwei Steuerventile **18**, **22**, die in Reihe geschaltet sind. Die beiden Halteeinrichtungen **10** sind ebenso an das Hydrauliksystem **17** angeschlossen wie ein weiterer Fluidspeicher **14** und die Pleuelstange **8**. Das erste Steuerventil **18** ist hier in Form eines elektrischen Ventils ausgebildet, das mittels eines Aktuators **30** schaltbar ist. Letzterer ist mit einer Steuerungseinrichtung **15** verbunden, mittels der der Aktuator **30** und mithin das Steuerventil **18** steuerbar sind. Das zweite Steuerventil **22** ist hier in Form eines mechanischen Ventils ausgebildet, das mit einer Antriebswelle **32** der Bindeeinrichtung **21** gekoppelt ist. Die Antriebswelle **32** wirkt mit einer Nockenscheibe **31** zusammen, die in dem gezeigten Beispiel zwei Nocken aufweist. Die Nocken bewirken, dass in Abhängigkeit einer Drehstellung der Nockenscheibe **31** ein Steuerhebel **37** betätigt wird, wodurch das zweite Steuerventil **22** geschaltet wird. Die Steuerventile **18**, **22** sind jeweils mittels einer Feder **38** verbunden, mittels der die Steuerventil **18**, **22** in einem im Übrigen kraftfreien Zustand in einer Nullstellung gehalten sind. Die Halteeinrichtungen **10** wirken gleichermaßen jeweils mit einer Feder **28** zusammen, mittels der die Halteeinrichtung **10** jeweils in ihrem Haltezustand haltbar sind. Zudem wirken die Halteeinrichtungen **10** jeweils mit einem Hydraulikzylinder **19** zusammen, mittels dessen die Halteeinrichtung **10** entgegen einer Federkraft der Feder **28** in ihren Freizustand überführbar sind. Die Hydraulikzylinder **19** der Halteeinrichtungen **10** sind unmittelbar an das Hydrauliksystem **17** angeschlossen. Zur Sicherstellung, dass ein Ausströmen des Arbeitsfluids aus den Hydraulikzylindern **19** unabhängig von einer Stellung des ersten Steuerventils **18** möglich ist, umfasst das Hydrauliksystem **17** ferner ein Rückschlagventil **29**, das eine von den Hydraulikzylinder **19** wegführende Strömungsrichtung freigibt.

Das Funktionsprinzip des Hydrauliksystems **17** gestaltet sich wie folgt: In einem ersten Zustand ist das zweite Steuerventil **22** geschlossen während das erste Steuerventil **18** geöffnet ist. Dies ist in **Figur 5** veranschaulicht. In dieser Konstellation sind die Hydraulikzylinder **19** der Halteeinrichtungen **10** strömungstechnisch mit einem Tank **39** verbunden. Die Hydraulikzylinder **19** sind mithin inaktiv, sodass die Halteeinrichtungen **10** mittels der zugehörigen Federn **28** jeweils in ihrem Haltezustand gehalten sind. Bei Vorliegen in diesem Haltezustand sind die Halteeinrichtungen **10** dazu geeignet, den Verdichterkolben **9** in seiner Pressstellung zu halten.

Bei einer Ankunft des Presskolbens **9** in seiner Pressstellung wird das zweite Steuerventil **22** - indirekt gesteuert durch die Bindeeinrichtung **21** - mechanisch geöffnet, sodass die Pleuelstange **8** und der Fluidspeicher **14** strömungstechnisch mit den Hydraulikzylindern **19** verbunden sind. Da das erste Steuerventil **18** in einem geöffneten Zustand vorliegt, in dem es eine Strömung des Arbeitsfluids in Richtung der Hydraulikzylinder **19** freigibt, führt die Öffnung des zweiten Steuerventils **20** dazu, dass die Hydraulikzylinder **19** mit Druck beaufschlagt werden, woraufhin die Halteeinrichtungen **10** entgegen der Spannkräfte der Federn **28** jeweils in ihren Freizustand überführt werden. Folglich wird der Verdichterkolben **9** nicht in seiner Pressstellung gehalten, sondern im weiteren Betrieb des Antriebs **3** mittels der Pleuelstange **8** in der üblichen Weise in dem Hauptkanal **5** in Richtung seiner Aushohlstellung zurückgezogen. Die Pleuelstange 8 liegt derweil in ihrem Kurzzustand vor.

Für den Fall, dass der Verdichterkolben **9** in seiner Pressstellung gehalten werden soll, wird bei Erreichen besagter Pressstellung mittels der Steuerungseinrichtung **15** der Aktuator **30** des ersten Steuerventils **18** angesteuert, sodass das Steuerventil **18** in seinen geschlossenen Zustand überführt wird. Dieser hat zur Folge, dass eine Strömung des Arbeitsfluids zu den Hydraulikzylindern **19** nicht möglich ist, sodass die Halteeinrichtungen **10** jeweils in ihrem Haltezustand verbleiben. Diese werden lediglich infolge des eintreffenden Verdichterkolbens **9** verdrängt, woraufhin die Halteeinrichtungen **10** mit ihren jeweiligen Griffabschnitten formschlüssig mit komplementären Haltestangen des Verdichterkolbens **9** eingreifen. Die periodische Öffnung des zweiten Steuerventils **22**, die infolge der mechanischen Kopplung desselben über den Steuerhebel **37** mit der Nockenscheibe **31** bedingt ist, führt in diesem Fall folglich nicht zu der Überführung der Halteeinrichtungen **10** in deren Freizustände.

Das Halten des Verdichterkolbens **9** in seiner Pressstellung führt im weiteren Betrieb des Antriebs **3** dazu, dass die Pleuelstange **8** gelängt wird, wobei der Pressabschnitt **12** der Pleuelstange **8** relativ zu dessen Antriebsabschnitt **11** bewegt wird. Insbesondere wird der Pressabschnitt **12** aus dem Antriebsabschnitt **11** herausgezogen. Hierdurch wird das Antriebsfluid aus dem Arbeitsraum **13** verdrängt und in den Fluidspeicher **7** geleitet, mittels dessen das Arbeitsfluid unter einem Druck speicherbar ist. In dem nunmehr laufenden Verdichtungszyklus, zu dessen Beginn der Verdichterkolben **9** in seiner Pressstellung gehalten ist und der Antrieb den Kurbelarm **24** bereits weiterdreht und die beschriebene Längung der Pleuelstange **8** zur Folge hat, wird nunmehr das erste Steuerventil **18** gesteuert mittels der Steuerungseinrichtung **15** geöffnet. In einem überschneidenden Zeitraum wird ferner - gesteuert mittels der Rotation der Antriebsachse **32** der Bindeeinrichtung **21** und der damit einhergehenden Rotation der Nockenscheibe **31** - der Steuerhebel **37** betätigt, wodurch das zweite Steuerventil **22** geöffnet wird. Hierdurch wird eine strömungstechnische Verbindung zwischen dem zweiten Fluidspeicher **14** des Hydrauliksystems **17** und den Hydraulikzylindern **19** hergestellt, woraufhin selbige die Halteeinrichtungen **10** in deren Freizustände überführen. Dies hat zur Folge, dass der Verdichterkolben **9** nunmehr wieder frei bewegbar ist. Infolge dieser Freigabe kann nunmehr der in dem Fluidspeicher **7** vorhandene Druck in den Arbeitsraum **13** der Pleuelstange **8** entladen werden, wodurch der Pressabschnitt **12** in den Antriebsabschnitt **11** der Pleuelstange **8** gedrückt wird. Da der Verdichterkolben **9** unmittelbar mit dem Pressabschnitt **12** verbunden ist, wird der Verdichterkolben **9** in gewünschter Weise in Richtung seiner Aushohlstellung beschleunigt und entlang des Hauptkanals **5** bewegt. Die Beschleunigung des Verdichterkolbens **9** erfolgt dabei in dem gezeigten Beispiel derart, dass der Verdichterkolben **9** seine Aushohlstellung zum Ende der ersten Hälfte des laufenden Verdichtungszyklus erreicht.

Der weitere Betrieb der Ballenpresse **1** erfolgt sodann in gewohnter Weise, wobei insbesondere während der zweiten Hälfte des noch andauernden Verdichtungszyklus weiteres Erntegut **2** in den Hauptkanal **5** übergeben werden kann und bereits mittels des Verdichterkolbens **9** erfasst und verdichtet wird.

Die Koppelung des zweiten Steuerventil **22** mit der Bindeeinrichtung **21** sowie des ersten Steuerventils **18** über eine Sensoreinrichtung und die Steuerungseinrichtung **15** mit der Bindeeinrichtung **21** ermöglicht es, das beschriebene Vorgehen derart zu steuern, dass das Halten und Freigeben des Verdichterkolbens **9** mit dem Binden eines jeweiligen Ballens mittels der Bindeeinrichtung **21** koordinierbar ist. Auf diese Weise können die beschriebenen Vorteile, das heißt das Binden eines jeweiligen Ballens in Gegenwart des von dem Verdichterkolben **9** ausgeübten Anpressdrucks ohne zeitliche Verzögerung des weiteren Betriebs der Ballenpresse **1** realisiert werden.

### Bezugszeichenliste

- 1: Ballenpresse
- 2: Erntegut
- 3: Antrieb
- 4: Vorkanal
- 5: Hauptkanal
- 6: Übergabeeinrichtung
- 7: Fluidspeicher
- 8: Pleuelstange
- 9: Verdichterkolben
- 10: Halteeinrichtung
- 11: Antriebsabschnitt
- 12: Pressabschnitt
- 13: Arbeitsraum
- 14: Fluidspeicher
- 15: Steuerungseinrichtung
- 16: Länge
- 17: Hydrauliksystem
- 18: Steuerventil
- 19: Hydraulikzylinder
- 20: Bindenadel
- 21: Bindeeinrichtung
- 22: Steuerventil
- 23: Antriebswelle
- 24: Kurbelarm
- 25: Drehachse
- 26: Schwungrad
- 27: Volumenstrommessgerät
- 28: Feder
- 29: Rückschlagventil
- 30: Aktuator
- 31: Nockenscheibe
- 32: Antriebswelle
- 33: Aufnahmeeinrichtung
- 34: Übergabeöffnung
- 35: Ende
- 36: Hydraulikleitung
- 37: Steuerhebel
- 38: Feder
- 39: Tank

## Patentansprüche

1. Landwirtschaftliche Ballenpresse (1) zum Pressen von Erntegut (2) zu Ballen, umfassend
- einen Antrieb (3),
- einen Vorkanal (4),
- einen Hauptkanal (5),
- eine Übergabeeinheit (6),
- eine Pleuelstange (8) sowie
- einen Verdichterkolben (9),
wobei das Erntegut (2) ausgehend von dem Vorkanal (4) mittels der Übergabeeinheit (6) in den Hauptkanal (5) übergebbar ist,
wobei der Verdichterkolben (9) während eines Betriebs der Ballenpresse (1) zyklisch zwischen einer Pressstellung und eine Ausholstellung überführbar ist,
wobei der Verdichterkolben (9) bei Vorliegen in seiner Pressstellung an einem dem Erntegut (2) zugewandten distalen Totpunkt und bei Vorliegen in seiner Ausholstellung an einem dem distalen Totpunkt gegenüberliegenden proximalen Totpunkt innerhalb des Hauptkanals (5) vorliegt,
wobei die Pleuelstange (8) in Form einer längenveränderlichen Kolben-Zylinder-Einheit ausgebildet ist, die von einem dem Antrieb (3) zugeordneten Antriebsabschnitt (11) und einen dem Verdichterkolben (9) zugeordneten Pressabschnitt (12) gebildet ist, die gemeinsam mindestens einen Arbeitsraum (13) begrenzen,
wobei der Verdichterkolben (9) während eines Betriebs der Ballenpresse (1) mittels mindestens einer Halteeinrichtung (10) in seiner Pressstellung haltbar ist,
die Ballenpresse weiter umfassend
mindestens einen strömungstechnisch mit dem Arbeitsraum (13) verbundenen, spannbaren Fluidspeicher (7), mittels dessen ein aus dem Arbeitsraum (13) verdrängtes Arbeitsfluid aufnehmbar ist, **gekennzeichnet durch**
eine Steuerungseinrichtung (15), mittels der mittelbar oder unmittelbar die Halteeinrichtung (10) zwischen einem Haltezustand und einem Freizustand überführbar ist, wobei die Halteeinrichtung (10) bei Vorliegen in ihrem Haltezustand dazu geeignet ist, den Verdichterkolben (9) in seiner Pressstellung zu halten,
und eine Bindeeinrichtung (21), mittels der ein gepresster Ballen mittels eines Bindemittels zusammenfassbar ist, wobei die Steuerungseinrichtung (15) in Wirkverbindung mit der Bindeeinrichtung (21) steht, insbesondere mit einer Antriebswelle der Bindeeinrichtung (21), sodass die Überführung der Halteeinrichtung (10) zwischen ihrem Haltezustand und ihrem Freizustand in Abhängigkeit eines Betriebs der Bindeeinrichtung (21) vornehmbar ist.

2. Ballenpresse (1) nach Anspruch 1, **dadurch gekennzeichnet, dass** der Fluidspeicher (7) bei Vorliegen der Pleuelstange (8) in einem Kurzzustand, in dem ihre Länge (16) minimal ist, vorgespannt ist.

3. Ballenpresse (1) nach Anspruch 1 oder 2, **dadurch gekennzeichnet, dass** die Halteeinrichtung (10) mittels mindestens eines Hydraulikzylinders (19) hydraulisch betreibbar ist, insbesondere hydraulisch in ihren Freizustand überführbar ist.

4. Ballenpresse (1) nach Anspruch 3, **dadurch gekennzeichnet, dass** die Halteeinrichtung (10) an ein Hydrauliksystem (17) angeschlossen sind, wobei vorzugsweise das Hydrauliksystem (17) mindestens ein Steuerventil (18) umfasst, mittels dessen eine strömungstechnische Verbindung zwischen einem, vorzugsweise vorgespannten, Fluidspeicher (14) und dem Hydraulikzylinder (19) wechselweise freigebbar und sperrbar ist.

5. Ballenpresse (1) nach Anspruch 4, **dadurch gekennzeichnet, dass** das Steuerventil (18) mit der Steuerungseinrichtung (15) verbunden ist, mittels der das Steuerventil (18) steuerbar ist.

6. Ballenpresse (1) nach Anspruch 4 oder 5, **gekennzeichnet durch** ein zweites Steuerventil (22), das mit dem ersten Steuerventil (18) in Reihe geschaltet ist, wobei vorzugsweise das erste Steuerventil (18) elektrisch und das zweite Steuerventil (22) mechanisch schaltbar sind.

7. Verfahren zum Betrieb einer Ballenpresse (1), umfassend die folgenden Verfahrensschritte:
a) Zu verdichtendes Erntegut (2) wird von einem Untergrund aufgenommen und mittelbar oder unmittelbar einem Hauptkanal (5) der Ballenpresse (1) zugeführt.
b) Mittels eines Antriebs (3) wird ein Verdichterkolben (9) derart angetrieben, dass er in dem Hauptkanal (5) zyklisch zwischen einer dem Erntegut (2) zugewandten, distalen Pressstellung und einer dem Erntegut (2) abgewandten, proximalen Ausholstellung bewegt wird.
c) Mittels einer Halteeinrichtung (10) wird der Verdichterkolben (9) zeitweise in seiner Pressstellung gehalten, wobei eine Pleuelstange (8), mittels der der Verdichterkolben (9) an den Antrieb (3) angeschlossen ist, weiterhin mittels des Antriebs (3) angetrieben und im Zuge dessen eine Länge (16) der Pleuelstange (8) verändert werden,
d) Erst nach Beginn eines Verdichtungszyklus, der mit Vorliegen des mittels der Halteeinrichtung (10) in seiner Pressstellung gehaltenen Verdichterkolbens (9) beginnt und im Zuge dessen der Verdichterkolben (9) bis in seine Ausholstellung hin und in seine Pressstellung zurück bewegt wird, wird die Halteeinrichtung (10) ausgehend von ihrem Haltezustand, in dem sie den Verdichterkolben (9) in der Pressstellung hält, in ihren Freizustand überführt, wodurch eine Bewegung des Verdichterkolbens (9) in Richtung seiner Ausholstellung freigegeben wird.
e) Der freigegebene Verdichterkolben (9) wird vor Ende des Verdichtungszyklus ausgehend von seiner Pressstellung in Richtung seiner Ausholstellung bewegt.
**gekennzeichnet durch** folgenden Verfahrensschritt:
f) Der Verdichterkolben (9) wird freigegeben, sobald verdichtetes Erntegut (2) mittels einer Bindeinrichtung (21) zusammengefasst ist.

8. Verfahren nach Anspruch 7, **dadurch gekennzeichnet, dass** die Bewegung des freigegebenen Verdichterkolbens (9) in Richtung seiner Ausholstellung mittels eines hydraulischen Betriebs der Pleuelstange (8) angetrieben wird.

9. Verfahren nach Anspruch 7 oder 8, **dadurch gekennzeichnet, dass** im Zuge einer Zunahme der Länge (16) der Pleuelstange (8) ein Arbeitsfluid aus einem Arbeitsraum (13) der als Kolben-Zylinder-Einheit ausgebildeten Pleuelstange (8) verdrängt wird.

10. Verfahren nach Anspruch 9, **dadurch gekennzeichnet, dass** das Arbeitsfluid in einen Fluidspeicher (7) geleitet und hierdurch eine Vorspannung des Fluidspeichers (7) erhöht werden.

11. Verfahren nach Anspruch 10, **dadurch gekennzeichnet, dass** das unter Druck stehende Arbeitsfluid zwecks Bewegung des Verdichterkolbens (9) in Richtung seiner Ausholstellung in den Arbeitsraum (13) eingebracht wird.

12. Verfahren nach einem der Ansprüche 7 bis 11, **dadurch gekennzeichnet, dass** der Verdichterkolben (9) während des Verdichtungszyklus derart ausgehend von seiner Pressstellung in Richtung seiner Ausholstellung bewegt wird, dass die Länge (16) Pleuelstange (8) spätestens bis zur Vollendung einer ersten Hälfte des Verdichtungszyklus reduziert wird, vorzugsweise die Pleuelstange (8) ihren Kurzzustand erreicht.

13. Verfahren nach einem der Ansprüche 7 bis 12, **dadurch gekennzeichnet, dass** während desselben Verdichtungszyklus, vorzugsweise während der zweiten Hälfte des Verdichtungszyklus, Erntegut (2) mittels einer Übergabeeinrichtung (6) ausgehend von einem Vorkanal (4) an den Hauptkanal (5) übergeben wird.

## Claims

1. An agricultural baler (1) for compressing harvested material (2) into bales, comprising
- a drive (3),
- a preliminary channel (4),
- a main channel (5),
- a transfer unit (6),
- a connecting rod (8), as well as
- a compactor piston (9),
wherein the harvested material (2) can be transferred from the preliminary channel (4) into the main channel (5) by means of the transfer unit (6),
wherein, during an operation of the baler (1), the compactor piston (9) can be transferred cyclically between a compressing position and a clearing position,
wherein, when in its compressing position, the compactor piston (9) is at a distal dead point facing the harvested material (2), and when in its clearing position, the compactor piston is at a proximal dead point opposite the distal dead point inside the main channel (5),
wherein the connecting rod (8) is configured in the form of a piston and cylinder unit with a variable length which is formed by a drive section (11) associated with the drive (3) and by a compressing section (12) which is associated with the compactor piston (9), which together delimit at least one working chamber (13),
wherein, during an operation of the baler (1), the compactor piston (9) can be retained in its compressing position by means of at least one retaining device (10),
the baler further comprising
at least one fluid reservoir (7) which can be pressurised and is fluidically connected to the working chamber (13), by means of which a working fluid forced out of the working chamber (13) can be received, **characterized by**
a control device (15) by means of which the retaining device (10) can be transposed directly or indirectly between a retaining state and a free state, wherein, when in its retaining state, the retaining device (10) is suitable for retaining the compactor piston (9) in its compressing position,
and a binding device (21) by means of which a compressed bale can be aggregated by means of a binder, wherein the control device (15) is operatively connected to the binding device (21), in particular to a drive shaft of the binding device (21), so that the transposition of the retaining device (10) between its retaining state and its free state can be carried out as a function of an operation of the binding device (21).

2. The baler (1) according to claim 1, **characterized in that** when the connecting rod (8) is in a short state in which its length (16) is a minimum, the fluid reservoir (7) is pre-pressurised.

3. The baler (1) according to claim 1 or claim 2, **characterized in that** the retaining device (10) can be operated hydraulically by means of at least one hydraulic cylinder (19), in particular can be transposed hydraulically into its free state.

4. The baler (1) according to claim 3, **characterized in that** the retaining device (10) is connected to a hydraulic system (17), wherein preferably, the hydraulic system (17) comprises at least one control valve (18) by means of which a fluid connection between a preferably pre-pressurised fluid reservoir (14) and the hydraulic cylinder (19) can be opened up and closed off in alternation.

5. The baler (1) according to claim 4, **characterized in that** the control valve (18) is connected to the control device (15), by means of which the control valve (18) can be controlled.

6. The baler (1) according to claim 4 or claim 5, **characterized by** a second control valve (22) which is connected to the first control valve (18) in series, wherein preferably, the first control valve (18) can be controlled electrically and the second control valve (22) can be controlled mechanically.

7. A method for operating a baler (1), comprising the following steps of the method:
a) harvested material (2) to be compacted is picked up from the ground and fed directly or indirectly to a main channel (5) of the baler (1),
b) a compactor piston (9) is driven by means of a drive (3) in a manner such that it is moved cyclically in the main channel (5) between a distal compressing position which is directed towards the harvested material (2) and a proximal clearing position which is directed away from the harvested material (2),
c) the compactor piston (9) is retained in its compressing position at times by means of a retaining device (10), wherein a connecting rod (8), by means of which the compactor piston (9) is connected to the drive (3), is also driven by means of the drive (3), during the course of which a length (16) of the connecting rod (8) is varied,
d) the retaining device (10) is transposed from its retaining state, in which it retains the compactor piston (9) in its compressing position, into its free state only after the start of a compaction cycle which commences with the compactor piston (9) being retained in its compressing position by means of the retaining device (10) and during the course of which the compactor piston (9) is moved into its clearing position and back into its compressing position, whereupon a movement of the compactor piston (9) in the direction of its clearing position is enabled,
e) prior to the end of the compaction cycle, the enabled compactor piston (9) is moved from its compressing position in the direction of its clearing position,
**characterized by** the following step of the method:
f) the compactor piston (9) is enabled as soon as compacted harvested material (2) has been aggregated by means of a binding device (21).

8. The method according to claim 7, **characterized in that** the movement of the enabled compactor piston (9) in the direction of its clearing position is driven by means of a hydraulic operation of the connecting rod (8).

9. The method according to claim 7 or claim 8, **characterized in that** during the course of an increase in the length (16) of the connecting rod (8), a working fluid is forced out of a working chamber (13) of the connecting rod (8) configured as a piston and cylinder unit.

10. The method according to claim 9, **characterized in that** the working fluid is conducted into a fluid reservoir (7) and a pre-pressurisation of the fluid reservoir (7) is increased thereby.

11. The method according to claim 10, **characterized in that** the pressurised working fluid is introduced into the working chamber (13) for the purpose of moving the compactor piston (9) in the direction of its clearing position.

12. The method according to one of claims 7 to 11, **characterized in that** during the compaction cycle, the compactor piston (9) is moved from its compressing position in the direction of its clearing position in a manner such that the length (16) of the connecting rod (8) is reduced, and preferably that the connecting rod (8) reaches its short state at the latest up to the completion of a first half of the compaction cycle.

13. The method according to one of claims 7 to 12, **characterized in that** during the same compaction cycle, preferably during the second half of the compaction cycle, harvested material (2) is transferred from a preliminary channel (4) to the main channel (5) by means of a transfer device (6).

## Revendications

1. Presse à balles agricole (1) pour le pressage de produit récolté (2) en balles, incluant
- un moyen d'entraînement (3),
- un précanal (4),
- un canal principal (5),
- une unité de transfert (6),
- une bielle (8) ainsi que
- un piston de compacteur (9),
le produit récolté (2) étant transférable à partir du précanal( 4) vers le canal principal (5) au moyen de l'unité de transfert (6),
le piston de compacteur (9) étant déplaçable cycliquement entre une position de pressage et une position reculée pendant un fonctionnement de la presse à balles (1),
le piston de compacteur (9) se trouvant, lorsqu'il se trouve dans sa position de pressage, dans un point mort distal tourné vers le produit récolté (2) et, lorsqu'il se trouve dans sa position reculée, dans un point mort proximal situé à l'opposé du point mort distal à l'intérieur du canal principal (5),
la bielle (8) étant conçue en forme d'une unité piston-cylindre à longueur variable qui est formée par une portion d'entraînement (11) associée au moyen d'entraînement (3) et par une portion de pressage (12) associée au piston de compacteur (9), lesquelles délimitent conjointement au moins une chambre de travail (13),
le piston de compacteur (9) pouvant être maintenu dans sa position de pressage au moyen au moins d'un équipement de maintien (10) pendant un fonctionnement de la presse à balles (1),
la presse à balles incluant en outre au moins un accumulateur de fluide tendable (7) qui est relié sur le plan de l'écoulement à la chambre de travail (13) et au moyen duquel un fluide de travail refoulé hors de la chambre de travail (13) peut être recueilli, **caractérisée par**
un équipement de commande (15) au moyen duquel l'équipement de maintien (10) est déplaçable indirectement ou directement entre un état de maintien et un état libre, l'équipement de maintien (10) étant apte, lorsqu'il se trouve dans son état de maintien, à maintenir le piston de compacteur (9) dans sa position de pressage, et un équipement de liage (21) au moyen duquel une balle pressée peut être regroupée à l'aide d'un moyen de liage, l'équipement de commande (15) étant en liaison active avec l'équipement de liage (21), en particulier avec un arbre d'entraînement de l'équipement de liage (21), de sorte que le déplacement de l'équipement de maintien (10) entre son état de maintien et son état libre est réalisable en fonction d'un fonctionnement de l'équipement de liage (21).

2. Presse à balles (1) selon la revendication 1, **caractérisée en ce que** l'accumulateur de fluide (7) est précontraint lorsque la bielle (8) se trouve dans un état court dans lequel sa longueur (16) est minimale.

3. Presse à balles (1) selon la revendication 1 ou 2, **caractérisée en ce que** l'équipement de maintien (10) est actionnable hydrauliquement au moyen d'au moins un vérin hydraulique (19), en particulier déplaçable hydrauliquement vers son état libre.

4. Presse à balles (1) selon la revendication 3, **caractérisée en ce que** l'équipement de maintien (10) est relié à un système hydraulique (17), préférentiellement le système hydraulique (17) incluant au moins une valve de commande (18) au moyen de laquelle une liaison d'écoulement entre un accumulateur de fluide, préférentiellement précontraint, (14) et le vérin hydraulique (19) est alternativement autorisable et blocable.

5. Presse à balles (1) selon la revendication 4, **caractérisée en ce que** la valve de commande (18) est reliée à l'équipement de commande (15) au moyen duquel la valve de commande (18) est commandable.

6. Presse à balles (1) selon la revendication 4 ou 5, **caractérisée par** une deuxième valve de commande (22) qui est montée en série avec la première valve de commande (18), préférentiellement la première valve de commande (18) étant commutable électriquement et la deuxième valve de commande (22) étant commutable mécaniquement.

7. Procédé de fonctionnement d'une presse à balles (1), incluant les étapes de procédé suivantes :
a) Du produit récolté à compacter (2) est ramassé sur un terrain et transféré indirectement ou directement à un canal principal (5) de la presse à balles (1).
b) Au moyen d'un équipement d'entraînement (3), un piston de compacteur (9) est entraîné de façon qu'il soit déplacé cycliquement dans le canal principal (5) entre une position de pressage distale tournée vers le produit récolté (2) et une position reculée proximale située à l'opposé du produit récolté (2).
c) Au moyen d'un équipement de maintien (10), le piston de compacteur (9) est maintenu temporairement dans sa position de pressage, une bielle (8), à l'aide de laquelle le piston de compacteur (9) est relié au moyen d'entraînement (3), étant encore entraînée à l'aide du moyen d'entraînement (3), une longueur (16) de la bielle (8) étant modifiée au cours de ce processus,
d) Seulement après le début d'un cycle de compactage, qui commence avec la présence du piston de compacteur (9) maintenu dans sa position de pressage au moyen de l'équipement de maintien (10) et au cours duquel le piston de compacteur (9) est déplacé jusqu'à sa position reculée et ramené dans sa position de pressage, l'équipement de maintien (10) est déplacé vers son état libre à partir de son état de maintien dans lequel il maintient le piston de compacteur (9) dans la position de pressage, de sorte qu'un déplacement du piston de compacteur (9) en direction de sa position reculée est autorisé.
e) Avant la fin du cycle de compactage, le piston de compacteur libéré (9) est déplacé en direction de sa position reculée à partir de sa position de pressage,
**caractérisé par** l'étape de procédé suivante :
f) Le piston de compacteur (9) est libéré dès que du produit récolté compacté (2) est regroupé au moyen d'un équipement de liage (21).

8. Procédé selon la revendication 7, **caractérisé en ce que** le déplacement du piston de compacteur libéré (9) est entraîné en direction de sa position reculée au moyen d'un fonctionnement hydraulique de la bielle (8).

9. Procédé selon la revendication 7 ou 8, **caractérisé en ce que**, au cours d'une augmentation de la longueur (16) de la bielle (8), un fluide de travail est refoulé hors d'une chambre de travail (13) de la bielle (8) conformée en unité piston-cylindre.

10. Procédé selon la revendication 9, **caractérisé en ce que** le fluide de travail est dirigé vers un accumulateur de fluide (7) et, de ce fait, une précontrainte de l'accumulateur de fluide (7) est augmentée.

11. Procédé selon la revendication 10, **caractérisé en ce que** le fluide de travail mis sous pression est introduit dans la chambre de travail (13) dans le but de déplacer le piston de compacteur (9) en direction de sa position reculée.

12. Procédé selon une des revendications 7 à 11, **caractérisé en ce que** le piston de compacteur (9) est déplacé, pendant le cycle de compactage, à partir de sa position de pressage en direction de sa position reculée, de sorte que la longueur (16) la bielle (8) est réduite au plus tard avant l'achèvement d'une première moitié du cycle de compactage, préférentiellement avant que la bielle (8) n'atteigne son état court.

13. Procédé selon une des revendications 7 à 12, **caractérisé en ce que**, pendant le même cycle de compactage, préférentiellement pendant la seconde moitié du cycle de compactage, du produit récolté (2) est transféré, au moyen d'un équipement de transfert (6), à partir d'un précanal (4) vers le canal principal (5).
